# EUROPÄISCHE PATENTANMELDUNG

(11) **EP 3 859 297 A1**
(43) Veröffentlichungstag der Anmeldung: **04.08.2021**
(21) Anmeldenummer: 20154842.7
(22) Anmeldetag: 31.01.2020
(51) Int. Cl.: G01M 13/025, G01M 13/021, G01M 13/022

(54) **ERPROBUNGSVORRICHTUNG FÜR GETRIEBE, ERPROBUNGSVERFAHREN, STEUEREINHEIT UND COMPUTERPROGRAMMPRODUKT**

(71) Anmelder: Flender GmbH, 46395 Bocholt (DE)
(72) Erfinder: Die Erfindernennung liegt noch nicht vor
(74) Vertreter: Michalski Hüttermann & Partner Patentanwälte mbB

(57) **Zusammenfassung**

Die Erfindung betrifft eine Erprobungsvorrichtung (10) für Getriebe (20, 30), die eine Antriebseinheit (12) und eine Abtriebseinheit (14) umfasst, die über ein erstes und ein zweites Getriebe (20, 30) miteinander verbunden sind. Erfindungsgemäß ist zumindest das erste Getriebe (20) zur zumindest teilweise gleichzeitigen Erprobung des ersten und zweiten Getriebes (20, 30) einstellbar kippbar ausgebildet. Die Erfindung betrifft auch ein Verfahren (100) zum zumindest teilweise gleichzeitigen Erproben von Getrieben (20, 30), das auf einer entsprechenden Erprobungsvorrichtung (10) umsetzbar ist. Gleichermaßen betrifft die Erfindung ein entsprechendes Computerprogrammprodukt (60) zur Durchführung des Verfahrens (100) auf einer solchen Erprobungsvorrichtung (10).

## Beschreibung

Die Erfindung betrifft eine Erprobungsvorrichtung für Getriebe und ein entsprechendes Erprobungsverfahren. Die Erfindung betrifft auch eine Steuereinheit, die dazu ausgebildet ist, an einer solchen Erprobungsvorrichtung das erfindungsgemäße Erprobungsverfahren durchzuführen. Ferner betrifft die Erfindung ein Computerprogrammprodukt, das zur Durchführung des Erprobungsverfahrens auf der Steuereinheit speicherbar und ausführbar ist.

Die Internetseite https://www.clemson.edu/cecas/departments/charleston/energy/wind-turbine-test-beds.html der Clemson University offenbart Datenblätter der dort eingesetzten Prüfstände für Gondeln von Windkraftanlagen bzw. deren Antriebssträngen. Die Prüfstände sind für maximale Antriebsleistungen von 7,5 MW und 15 MW ausgelegt. Auf den Prüfständen ist jeweils zumindest ein Antriebsmotor angeordnet, der über eine Hochgeschwindigkeitswelle mit einem Vorgelegegetriebe verbunden ist. Aus dem Vorgelegegetriebe tritt eine Niedergeschwindigkeitswelle aus, über die ein Rotor einer zu erprobende Windkraftanlagengondel angetrieben wird. Der Rotor der Windkraftanlagengondel ist mittels einer im Wesentlichen torusförmigen Lasteinleitungseinheit verbunden, die dazu geeignet ist, Betriebszustände der Windkraftanlage zu simulieren.

Die Internetseite https://w3.windmesse.de/windenergie/pm/27102-iwes-enercon-test-prufstand-gondel-anlegenzertifizierung offenbart einen Prüfstand für Windkraftanlagen des Fraunhofer-Instituts für Windenergiesysteme, kurz IWES, in Bremerhaven. Der Prüfstand weist langsam drehende Direktantriebe auf, mit denen die zu erprobenden Windkraftanlagen angetrieben werden.

Aus der Druckschrift DE 10 2010 053 808 A1 ist ein Windkraftgetriebeprüfstand bekannt, auf dem zwei Getriebe montierbar sind. Die Getriebe werden über eine Antriebseinheit angetrieben, die mittels eines Torsionsstabs mit einer Belastungseinheit verbunden ist. Die Belastungseinheit ist mit zwei Torsionsstäben verbunden, die gegeneinander verspannt werden können.

Das Dokument EP 2 574 778 B1 zeigt eine Erprobungsvorrichtung für eine Getriebe und einen elektromechanischen Energiewandler, bei der das zu erprobende Getriebe in einem Getriebesystem montiert wird. Dem zu erprobenden Getriebe wird über mehrere Motoren Antriebsleistung zugeführt, die auch in den elektromechanischen Energiewandler geleitet wird.

In verschiedenen Anwendungsgebieten werden leistungsfähige Getriebe eingesetzt, deren Entwicklungsprozess oder Zulassungsprozess eine Erprobung der entsprechenden Getriebe erfordert. Es besteht deshalb Bedarf an einer Erprobungsvorrichtung für Getriebe, die eine schnelle Durchführung von Erprobungsläufen erlaubt, ein hohes Maß an Flexibilität bietet und in einfacher Weise herstellbar ist. Der Erfindung liegt die Aufgabenstellung zugrunde, eine Möglichkeit zum Erproben von Getrieben bereitzustellen, die in zumindest einem der skizzierten Aspekte eine Verbesserung bietet.

Die Aufgabenstellung wird durch die erfindungsgemäße Erprobungsvorrichtung für Getriebe gelöst, die eine Antriebseinheit und eine Abtriebseinheit umfasst. Durch die Antriebseinheit wird eine mechanische Antriebsleistung bereitgestellt, mit der die zu erprobenden Getriebe antreibbar sind. Dazu kann die Antriebseinheit beispielsweise als Elektromotor ausgebildet sein. Die Abtriebseinheit ist dazu ausgebildet, die durch die Getriebe geleitete mechanische Antriebsleistung aufzunehmen. Dazu kann die Abtriebseinheit beispielsweise als Generator oder als Bremse ausgebildet sein. Die Antriebseinheit und die Abtriebseinheit sind über ein erstes und ein zweites Getriebe, die mit der Erprobungsvorrichtung zu erproben sind, miteinander verbunden. Die Verbindung über das erste und zweite Getriebe leitet die mechanische Antriebsleistung von der Antriebseinheit zur Abtriebseinheit. Durch ein Einstellen der mechanischen Antriebsleistung sind im Rahmen eines Erprobungslaufs im ersten und zweiten Getriebe vorliegenden Drehzahlen vorgebbar. Erfindungsgemäß ist zumindest das erste Getriebe in einstellbarer Weise kippbar und/oder verschiebbar ausgebildet. Die Erprobungsvorrichtung ist dementsprechend dazu ausgebildet, zumindest das erste Getriebe einstellbar zu kippen und/oder zu verschieben, wenn das erste Getriebe bestimmungsgemäß mit der Erprobungsvorrichtung verbunden ist. Das Kippen erfolgt dabei um mindestens eine Raumachse, die senkrecht zu einer Hauptdrehachse des ersten Getriebes ausgerichtet sein kann, oder mit der Hauptdrehachse des ersten Getriebes koinzidiert. Das Verschieben erfolgt translatorisch entlang zumindest einer der Raumachsen. Durch das Kippen und/oder Verschieben wird auch eine mechanische Reaktion am zweiten Getriebe hervorgerufen. Das erste Getriebe und das zweite Getriebe sind dadurch zumindest teilweise gleichzeitig erprobbar.

Ein zumindest teilweise gleichzeitiges Erproben des ersten und zweiten Getriebes erlaubt es, den Erprobungsbetrieb zu beschleunigen. Insbesondere können das erste und zweite Getriebe typenverschieden ausgebildet sein, also nicht baugleich oder gegenseitig austauschbar. Unter der Typenverschiedenheit ist dabei auch der Fall eines ersten und zweiten Getriebes zu verstehen, die punktuell über unterschiedliche Komponenten verfügen. Dies können beispielweise Getriebe mit unterschiedlichen Lagern, aber ansonsten gleichem Aufbau sein. Gleichermaßen können auch Getriebe zumindest teilweise gleichzeitig erprobt werden, bei denen Komponenten in unterschiedlichen Herstellungsverfahren hergestellt sind, ansonsten jedoch den gleichen Aufbau aufweisen. Dies erlaubt es, unterschiedliche Typen, Modelle oder Varianten von Getrieben in einem gemeinsamen Erprobungslauf zu erproben, was die Anzahl an erforderlichen Erprobungsläufen, beispielsweise für ein Testprogramm reduziert. Die Anzahl an erforderlichen Erprobungsläufen ist dadurch im Wesentlichen halbierbar, was insgesamt einen wirtschaftlichen Erprobungsbetrieb erlaubt.

In einer Ausführungsform der beanspruchten Erprobungsvorrichtung ist durch das Kippen und/oder Verschieben des ersten Getriebes zwischen dem ersten und zweiten Getriebe eine mechanische Reaktion erzeugbar. Die mechanische Reaktion kann dabei eine Reaktionskraft und/oder eine Reaktionsdrehmoment umfassen. Hierdurch ist ein realer Betrieb des Getriebes nachstellbar, bei dem die mechanische Antriebsleistung mit einer Abweichung von einer idealisierte Hauptdrehachse eingeleitet wird. Insbesondere bei Getrieben, die in Windkraftanlagen einzusetzen sind, ist so ein realer Betriebszustand mit wechselnden Windbedingungen nachstellbar. Die mechanische Reaktion, die die Reaktionskraft und/oder das Reaktionsdrehmoment umfasst, ist damit gezielt vorgebbar und ist dazu geeignet, als Betriebsbedingungsvorgabe Teil eines Erprobungslaufs zu sein, der mit der Erprobungsvorrichtung durchzuführen ist. Dies erlaubt insgesamt, beispielsweise durch einen Benutzer, einen Algorithmus oder eine Tabelle eine weite Spanne an Programmen für die Erprobung der Getriebe vorzugeben. Insbesondere ist es so möglich, für das erste und zweite Getriebe gewonnenen Messdaten im Erprobungslauf durch einen einfachen Zeitstempel miteinander zu verknüpfen. Eine derartige Verknüpfung gewährleistet in einfacher Weise eine Vergleichbarkeit der beiden Getriebe bei korrespondierenden Betriebsbedingungen. Auch dadurch kann insgesamt die für ein Erprobungsprogramm notwendige Dauer verkürzt werden.

Des Weiteren kann auch das zweite Getriebe kippbar und/oder verschiebbar ausgebildet sein. Die Kippbarkeit bzw. Verschiebbarkeit des zweiten Getriebes kann dabei der Kippbarkeit des ersten Getriebes entsprechen. Insbesondere ist die Erprobungsvorrichtung, analog der Kippbarkeit und/oder Verschiebbarkeit des ersten Getriebes, auch dazu ausgebildet, das zweite Getriebe einstellbar zu kippen und/oder zu verschieben. Die Kippbarkeit und/oder Verschiebbarkeit des zweiten Getriebes ermöglichen es, bei einem Erprobungsdurchlauf eine breitere Spanne an Beanspruchungen, und damit an Reaktionskräften und/oder Reaktionsdrehmomenten hervorzurufen. Ebenso können das erste und zweite Getriebe gleichzeitig gekippt und/oder verschoben werden und dadurch eine einzustellende Auslenkung auf mehrere Kipp- und/oder Verschiebebewegungen aufgeteilt werden. Dadurch wird die Flexibilität der beanspruchten Erprobungsvorrichtung weiter gesteigert.

Eine weitere Ausführungsform der beanspruchten Erprobungsvorrichtung weist zumindest einen Aktuator auf, der dazu ausgebildet ist, zumindest das erste Getriebe zu kippen und/oder zu verschieben. Der Aktuator kann dazu beispielsweise mit der Umgebung fest verbunden sein. Alternativ oder ergänzend kann der Aktuator auch zwischen dem ersten und zweiten Getriebe angeordnet sein, und/oder als rotierender Aktuator ausgebildet sein. Insbesondere kann der Aktuator als Hydraulikzylinder, Servomotor und/oder Spindelantrieb ausgebildet sein. Aktuatoren, insbesondere Hydraulikzylinder, sind in unterschiedlichen Bauformen verfügbar, die eine hohe Betätigungskraft bei gleichzeitig hoher Betätigungspräzision bieten. Ebenso können erreichte Betätigungspositionen des Aktuators präzise gehalten werden. Insbesondere ist eine exakte Durchführung des Kippens und/oder Verschiebens im Erprobungslauf möglich, was dabei wiederum zu präzisen Messdaten führt. Alternativ oder ergänzend kann das erste Getriebe aus über mehrere Aktuatoren kippbar und/oder verschiebbar sein, wodurch die skizzierten Vorteile in erhöhtem Ausmaß erzielt werden. Weiter alternativ oder ergänzend kann auch das zweite Getriebe über mindestens einen Aktuator kippbar und/oder verschiebbar ausgebildet sein. Auch dadurch werden die beschriebenen Vorteile eines präzisen Ablaufs eines Erprobungslaufes in erhöhtem Ausmaß erzielt. Ebenso sind Aktuatoren wie beispielweise Hydraulikzylinder in einer Vielzahl an Größen verfügbar. Eine technische aufwendige torusförmige oder kronenförmige Lasteinleitungseinheit ist in der beanspruchten Erprobungseinheit nicht notwendig. Ebenso ist eine Reparatur solcher Aktuatoren in einfacher Weise durchführbar, was eine besonders kosteneffiziente Wartung erlaubt. Dadurch bietet die beanspruchte Lösung insgesamt ein besonders hohes Maß an Wirtschaftlichkeit.

Darüber hinaus kann das erste Getriebe in der beanspruchten Erprobungsvorrichtung auf einem kippbaren Tragrahmen angeordnet sei. Ein solcher Tragrahmen kann beispielsweise auf Gelenkstützen und/oder zumindest einem Aktuator angeordnet sein. Durch eine Betätigung des zumindest einen Aktuators ist die räumliche Lage des Tragrahmens änderbar. Das erste Getriebe kann auf einer Versuchshalterung auf dem Tragrahmen befestigt werden. Für eine Mehrzahl an Typen von Getrieben besteht somit ein einheitlicher Versuchsaufbau, bei dem in einfacher Weise durch Einstellen von gewünschten translatorischen Verschiebungen und/oder Kippwinkeln Reaktionskräfte und/oder Reaktionsdrehmomente mit im Wesentlichen identischen Steuerungsbefehle auch einheitliche Erprobungsläufe einstellbar sind. Alternativ oder ergänzend kann auch das zweite Getriebe auf einem solchen Tragrahmen angeordnet sein. Die Verwendung von Tragrahmen bietet einen insgesamt einheitlichen Versuchsaufbau auf der beanspruchten Erprobungsvorrichtung, der für eine Vielzahl an unterschiedlichen Bautypen von Getrieben geeignet ist und einen vereinfachten Ablauf von Erprobungsläufen erlaubt.

In einer weiteren Ausführungsform der beanspruchten Erprobungsvorrichtung sind das erste und das zweite Getriebe in gegenläufiger Übersetzungsrichtung miteinander verbunden. Eine solche Anordnung wird auch back-to-back-Anordnung genannt. Dadurch findet, entlang eines Flusses der mechanischen Antriebsleistung betrachtet, in einem Getriebe zunächst eine Erhöhung der vorliegenden Drehzahl statt und anschließend eine Verringerung der vorliegenden Drehzahl statt. Alternativ ist auch eine in puncto Erhöhung und Reduzierung umgekehrte Anordnung des ersten und zweiten Getriebes möglich. Der Abtriebseinheit wird dadurch, unter Berücksichtigung mechanischer Verluste, die mechanische Antriebsleistung mit einer Drehzahl zugeführt, die ähnlich hoch oder identisch oder verschieden ist wie beim Austritt aus der Antriebseinheit. Die Antriebseinheit und die Abtriebseinheit, beispielsweise ein Elektromotor und ein Generator, können damit beispielsweise als baugleiche elektromechanische Maschinen in gegenläufigem Betrieb ausgebildet sein. Dadurch wird die Wartung der beanspruchten Erprobungsvorrichtung vereinfacht, was wiederum einen besonders wirtschaftlichen Betrieb ermöglicht. Des Weiteren erlaubt eine solche Anordnung es, bei einem Kippen und oder Verschieben am ersten und zweiten Getriebe im Wesentlichen spiegelbildliche Reaktionskräfte und/oder Reaktionsdrehmomente hervorzurufen. Dies gewährleistet eine Vergleichbarkeit der Messdaten am ersten und zweiten Getriebe in einem Erprobungslauf. Infolgedessen ist gewährleistet, dass das erste und zweite Getriebe bei einem Erprobungslauf optimal auslastbar sind. Insgesamt werden so die Vorteile der beanspruchten Lösung in gesteigertem Ausmaß verwirklicht.

Ferner kann der zumindest eine Aktuator am Untergrund befestigt sein. Dadurch ist eine stabile Verbindung mit der Umgebung gewährleistet, was wiederum eine dauerhafte präzise Durchführung von Erprobungsläufen erlaubt. Insbesondere kann der zumindest eine Aktuator unterhalb des zumindest ersten Getriebes angeordnet sein. Beispielsweise kann eine Mehrzahl an Aktuatoren auf einem Fundament, das unterhalb einer Bodenebene aufgenommen ist, angeordnet sein. Unter der Bodenebene ist hier ein Bodenniveau der Umgebung zu verstehen, beispielsweise ein Hallenboden. Das Fundament kann sich dementsprechend im Wesentlichen in einer kellerartigen Vertiefung befinden. Der zumindest eine Aktuator ist dabei zumindest teilweise unterhalb der Bodenebene angeordnet. Die Aktuatoren sind damit auf einer reduzierten Fundamentfläche positionierbar, die wiederum einen reduzierten Bauaufwand erfordert. Des Weiteren weist die Erprobungsvorrichtung eine reduzierte vertikale Abmessung auf. Dadurch kann die Erprobungsvorrichtung in einer niedrigen Halle aufgebaut werden, was auch eine niedrigere Kranbahn in der Halle erlaubt. Die beanspruchte Erprobungsvorrichtung bietet auch eine verbesserte Zugänglichkeit, was eine vereinfachte Wartung ermöglicht. Ebenso kann ein Fundament unter der Bodenebene in Verbindung mit einer Wandung als Wanne dienen. Eine solche Wanne vermeidet beispielsweise bei einer Leckage das Eindringen von Hydraulikflüssigkeit in die Umgebung. Die beanspruchte Erprobungsanordnung ist somit platzsparend, in kosteneffizienter Weise herstell- und wartbar, und bietet ein hohes Maß an Sicherheit gegen Umweltschäden.

Gemäß einer weiteren Ausführungsform der beanspruchten Erprobungsvorrichtung können das erste oder zweite Getriebe unmittelbar drehmomentübertragend mit der Antriebseinheit oder der Abtriebseinheit verbunden sein. Bei einer solchen unmittelbaren Verbindung wird die von der Antriebseinheit erzeugte mechanische Antriebsleistung ohne Veränderung der vorliegenden Drehzahl oder des vorliegenden Drehmoments dem ersten oder zweiten Getriebe zugeführt. Korrespondierend erfolgt zwischen den Getrieben und der Abtriebseinheit auch keine weitere Veränderung der mechanischen Antriebsleistung in puncto Drehzahl oder Drehmoment. Ein Vorgelegegetriebe oder eine sogenannte Direct-Drive-Einheit sind deshalb bei der beanspruchten Erprobungsvorrichtung entbehrlich. Auch dadurch werden die oben skizzierten Vorteile der beanspruchten Erprobungsvorrichtung weiter gesteigert.

Ferner können das erste und/oder zweite Getriebe als Windkraftanlagengetriebe ausgebildet sein. Bei der Prototypenerprobung oder der Zulassung von Windkraftanlagengetrieben sind in Erprobungsläufen unterschiedliche Windbedingungen zu erproben, beispielsweise wechselnde Windrichtungen und Windstärken. Um derartige Windbedingungen nachzustellen ist die mechanische Antriebsleistung abweichend von einer idealisierten Hauptdrehachse in das Getriebe einzuleiten. Beispielsweise ist die mechanische Antriebsleistung mit einer radiale Querkraft zu beaufschlagen, die auf eine Eingangswelle des entsprechenden Getriebes einwirkt. Eine solche radiale Querkraft kann sich durch Windlasten an einem Rotor einer Windkraftanlage einstellen, die wiederum auf eine Rotorwelle wirken, die mit der Eingangswelle des Getriebes verbunden ist. Die beanspruchte Erprobungsvorrichtung bietet eine einfache und wirtschaftliche Möglichkeit, durch das Kippen und/oder Verschieben des zumindest ersten Getriebes entsprechende Reaktionskräfte und/oder Reaktionsdrehmomente zu erzeugen, die solche Windbedingungen nachstellen. Die technischen Vorteile der beanspruchten Erprobungsvorrichtung sind in besonderem Umfang erzielbar, wenn damit ein Windkraftanlagengetriebe erprobt wird. Gleichermaßen ist mittels der beanspruchten Erprobungsvorrichtung eine breite Spanne an Einsatzbedingungen von Getrieben für Industrie-Applikationen nachstellbar. Durch das zumindest teilweise gleichzeitige Erproben von zwei Getrieben kann so aus einer Auswahl an Getriebemodellen schnell ermittelt werden, welches für einen neuen Einsatzzweck am geeignetsten ist.

Darüber hinaus kann der beanspruchten Erprobungsvorrichtung auch eine Steuereinheit zugeordnet sein, die zu einem Kippen zumindest des ersten Getriebes ausgebildet ist. Die Steuereinheit ist dazu eingerichtet, Steuerbefehle an Komponenten der Erprobungsvorrichtung, beispielsweise an Aktuatoren, auszugeben und so die Reaktionskräfte und/oder Reaktionsdrehmomente zu erzeugen, durch die eine Betriebsbedingungsvorgabe zumindest am ersten Getriebe umgesetzt wird. Dadurch sind beispielweise veränderliche Windbedingungen nachstellbar. Insbesondere können so in einfacher Weise Reaktionskräfte und/oder Reaktionsdrehmomente bezogen auf mehrere Raumachsen vorgeben. Ergänzend kann die Steuereinheit dazu ausgebildet sein, weitere Komponenten der Erprobungsvorrichtung zu steuern, beispielsweise durch ein Vorgeben einer Drehzahl der Antriebseinheit. Genauso können mittels der Steuereinheit weitergehende Parameter, wie beispielweise Drücke, Temperaturen oder Geschwindigkeiten eingestellt werden, die für einen Erprobungslauf relevant sein können. Die Steuereinheit kann unmittelbar der Erprobungsvorrichtung zugeordnet sein, beispielsweise als interne Steuereinheit. Alternativ kann die Steuereinheit auch als übergeordnete Steuereinheit ausgebildet sein, die über eine Datenverbindung mit der Erprobungsvorrichtung gekoppelt ist. Weiter alternativ kann die Steuereinheit auch als eine Kombination einer internen und einer übergeordneten Steuereinheit ausgebildet sein. Eine Steuereinheit erlaubt es einem Benutzer, in einfacher Weise eine Betriebsbedingungsvorgabe für einen Erprobungslauf einzustellen, beispielsweise durch eine Benutzereingabe, einen Algorithmus oder durch eine Tabelle, die einen angestrebten Erprobungslauf wiedergeben. Derartige Steuereinheiten verleihen der beanspruchten Erprobungsvorrichtung somit eine verbesserte Benutzerfreundlichkeit und ein hohes Maß an Flexibilität im Betrieb.

Darüber hinaus kann die beanspruchte Erprobungsvorrichtung mit einem Mittellager versehen sein, durch das das erste und das zweite Getriebe miteinander verbindbar sind. Dazu sind das erste und zweite Getriebe auf entgegengesetzten Seiten des Mittellagers angeordnet und mit diesem lösbar verbunden. Das Mittellager ist dazu ausgebildet, Radialkräfte aufzunehmen, die auf zumindest eine Welle einwirkt, die das erste und zweite Getriebe drehmomentübertragend verbindet. Das Mittellager kann unmittelbar mit der Umgebung, also dem Untergrund oder einem Fundament, verbunden sein. Alternativ kann das Mittellager auch über einen Aktuator mit der Umgebung verbunden sein. Das Mittellager dient dazu, die aufgenommenen Radialkräfte in die Umgebung einzuleiten. Alternativ kann durch den Aktuator auch eine Erprobungskraft auf das Mittellager, und somit auch das erste und zweite Getriebe, ausgeübt werden. Dies erlaubt es, in vielseitiger Weise komplexe dynamische Betriebsbedingungen, beispielsweise veränderliche Windbedingungen, nachzustellen.

Die beschriebene Aufgabenstellung wird auch durch ein erfindungsgemäßes Verfahren zum Erproben von Getrieben gelöst. Das erfindungsgemäße Verfahren umfasst einen ersten Schritt, in dem ein Bereitstellen eines ersten und eines zweiten Getriebes in einer Erprobungsvorrichtung erfolgt. In einem anschließenden zweiten Schritt erfolgt ein Aktivieren einer Antriebseinheit, die der Erprobungsvorrichtung zugeordnet ist. Mittels der Antriebseinheit wird so für das erste und zweite Getriebe mechanische Antriebsleistung bereitgestellt, durch die sich ein Betrieb des Getriebes einstellt, der im Rahmen des Erprobens zu erfassen ist. Korrespondierend dazu wird durch die Abtriebseinheit ein belastendes Drehmoment bereitgestellt. In einem dritten Schritt des Verfahrens erfolgt ein einstellbares Kippen und/oder Verschieben zumindest des ersten Getriebes. Dadurch wird zwischen dem ersten Getriebe und dem zweiten Getriebe eine Reaktionskraft und/oder ein Reaktionsdrehmoment hervorgerufen. Erfindungsgemäß entsprechen die Reaktionskraft und/oder das Reaktionsdrehmoment einer Erprobungskraft beziehungsweise einem Erprobungsdrehmoment. Sofern ein Mittellager vorhanden ist, auch in Form einer Radialkraft. Die Erprobungskraft(e) beziehungsweise das Erprobungsdrehmoment(e) gehören zu einer Betriebsbedingungsvorgabe, die zu einem bestimmungsgemäßen Erprobungslauf gehören. Dadurch können beispielsweise veränderliche Windbedingungen an einer Windkraftanlage, und somit die veränderlichen Betriebsbedingungen eines Windkraftanlagengetriebes nachgestellt werden. Nach dem einstellbaren Kippen und/oder Verschieben zumindest des ersten Getriebes sind am ersten und/oder zweiten Getriebe mittels mindestens eines Sensors Messdaten erfassbar, die einen zu erfassenden Lastzustand des Getriebes beschreiben.

In einer Ausführungsform des beanspruchten Verfahrens kann das Erproben des ersten und zweiten Getriebes zumindest teilweise gleichzeitig erfolgen. Die mechanischen Reaktionen, die die Reaktionskraft und/oder das Reaktionsdrehmoment umfasst, sind für das erste und zweite Getriebe im Wesentlichen gleich (spiegelbildlich), so dass für beide Getriebe zumindest teilweise gleichzeitig im gleichen Erprobungslauf die gleichen Betriebsbedingungen vorliegen. Dadurch besteht die Möglichkeit, beispielsweise durch Zeitstempel, Messdaten, die das erste Getriebe betreffen, mit Messdaten, die das zweite Getriebe betreffen, unmittelbar zu vergleichen. Insbesondere können das erste und zweite Getriebe typenverschieden ausgebildet sein. Das beanspruchte Verfahren bietet dadurch eine erhöhte Effizienz, da im Vergleich zu bekannten Lösungen nunmehr zwei typenverschiedene Getriebe auf einmal erprobbar sind. Alternativ können auch zwei identische Getriebe gleichzeitig erprobt werden. Durch die Verwendung von zwei identischen Getrieben liegen für jeden Zustand zumindest zwei korrespondierende Messdaten vor, so dann durch statistische Auswertung dieser, beispielsweise durch eine Mittelwertbildung, ein Resultat eines Erprobungslaufs aussagekräftiger ist. Dadurch kann die Dauer eines Erprobungsprogramms, beispielsweise einer Zulassungserprobung, reduziert werden.

Ferner kann das beanspruchte Verfahren mittels einer Erprobungsvorrichtung nach einer der oben skizzierten Ausführungsformen durchgeführt werden. Die beschriebene Erprobungsvorrichtungen erlaubt es, das beanspruchte Verfahren in einer besonders einfachen, wartungsarmen und präzisen Weise schnell und wirtschaftlich durchzuführen.

Die oben skizzierte Aufgabenstellung wird gleichermaßen durch eine erfindungsgemäße Steuereinheit gelöst. Die Steuereinheit umfasst einen Speicher und ein Rechenwerk und ist dazu geeignet, Benutzereingaben zu empfangen und Steuerbefehle an zumindest einen Aktuator einer Erprobungsvorrichtung auszugeben. Die Steuereinheit kann als interne Steuereinheit der Erprobungsvorrichtung unmittelbar zugeordnet sein, oder als übergeordnete Steuereinheit ausgebildet sein, die über eine Datenverbindung mit der Erprobungsvorrichtung gekoppelt ist. Eine interne Steuereinheit kann beispielsweise als Speicherprogrammierbare Steuerung, kurz SPS oder auch Progammable Logic Controller, kurz PLC, genannt, ausgebildet sein. Eine übergeordnete Steuereinheit kann beispielsweise als Leitrechner, Webserver, Handgerät oder Computer-Cloud ausgebildet sein. Darüber hinaus kann die Steuereinheit auch als eine Kombination einer internen Steuereinheit und einer übergeordneten Steuereinheit ausgebildet sein. Die Steuereinheit ist erfindungsgemäß dazu ausgebildet, ein Verfahren gemäß zumindest einer der oben beschriebenen Ausführungsformen durchzuführen. Dazu kann in der Steuereinheit ein Computerprogrammprodukt ausführbar gespeichert sein. Ferner kann die erfindungsgemäße Steuereinheit mit einer Erprobungsvorrichtung nach einer der oben skizzierten Ausführungsformen verbunden sein.

Die beschriebene Aufgabenstellung wird ebenfalls durch ein erfindungsgemäßes Computerprogrammprodukt gelöst. Das Computerprogrammprodukt ist dazu ausgebildet, Erprobungskräfte und/oder Erprobungsdrehmomente zu einem Erproben von Getrieben in einem Erprobungslauf vorzugeben und einzustellen. Das Computerprogrammprodukt ist zu einem Ausgeben von Steuerungsbefehlen an zumindest einen Aktuator ausgebildet, der zu einer Erprobungsvorrichtung gehört. Das Computerprogrammprodukt kann als Software ausgebildet sein, in Form eines Chips, also festverdrahtet, oder einer FPGA-Schaltung, oder einer Kombination hieraus. Des Weiteren kann das Computerprogrammprodukt monolithisch ausgebildet sein, oder als System von mindestens zwei Teilprogrammen, die auf separater Hardware ausführbar sind und die in Kommunikation miteinander die Funktionsweise des Computerprogrammprodukts verwirklichen. Erfindungsgemäß ist das Computerprogrammprodukt dazu ausgebildet, auf einer erfindungsgemäßen Steuereinheit ausgeführt zu werden. Durch das Computerprogrammprodukt ist im Zusammenwirken mit einer Steuereinheit eine Erprobungsvorrichtung nach einer der oben beschriebenen Ausführungsformen betreibbar bzw. eines der oben dargestellten Verfahren umsetzbar. Das erfindungsgemäße Computerprogrammprodukt bietet die Möglichkeit, zwei Getriebe in einfacher Weise zusammen zu erproben und bietet ein hohes Maß an Konfigurierbarkeit. Insbesondere können durch eine Benutzereingabe angestrebte Betriebsbedingungsvorgaben eingestellt werden, die durch das Computerprogrammprodukt in entsprechende Reaktionskräfte und/oder Reaktionsdrehmomente selbsttätig umsetzbar sind. Dementsprechend kann die beanspruchte Erprobungsvorrichtung im Betrieb auch durch das beanspruchte Computerprogrammprodukt geregelt werden. Ergänzend kann das Computerprogrammprodukt auch dazu ausgebildet sein, empfangende Messdaten von zumindest einem Sensor, der am ersten oder zweiten Getriebe angebracht ist, zu speichern und auszuwerten. Insbesondere kann im erfindungsgemäßen Computerprogrammprodukt auch ein Simulationsabbild des ersten und/oder zweiten Getriebes, und/oder einer Windkraftanlage und/oder einer Industrie-Applikation gespeichert sein. Derartige Simulationsabbilder sind auch als Digitale Zwillinge oder Digital Twins bekannt. Die Bedienung und Benutzung einer entsprechenden Erprobungsvorrichtung wird somit vereinfacht und der Erprobungsbetrieb beschleunigt.

Die Erfindung wird im Folgenden anhand von Figuren einzelner Ausführungsformen beschrieben. Die Merkmale der Figuren sind dabei ohne Weiteres untereinander kombinierbar. Die Figuren sind insoweit in gegenseitiger Ergänzung zu lesen, dass gleiche Bezugszeichen auf die gleiche technische Bedeutung haben. Es zeigt im Einzelnen:
- FIG 1: eine Schnittansicht einer ersten Ausführungsform der beanspruchten Erprobungsvorrichtung;
- FIG 2: eine teilweise geschnittene Schrägansicht einer zweiten Ausführungsform der beanspruchten Erprobungsvorrichtung;
- FIG 3: eine Schrägansicht einer dritten Ausführungsform der beanspruchten Erprobungsvorrichtung;
- FIG 4: schematisch einen Ablauf einer Ausführungsform eines beanspruchten Erprobungsverfahrens;
- FIG 5: schematisch ein Ausschnitt einer vierten Ausführungsform der beanspruchten Erprobungsvorrichtung.

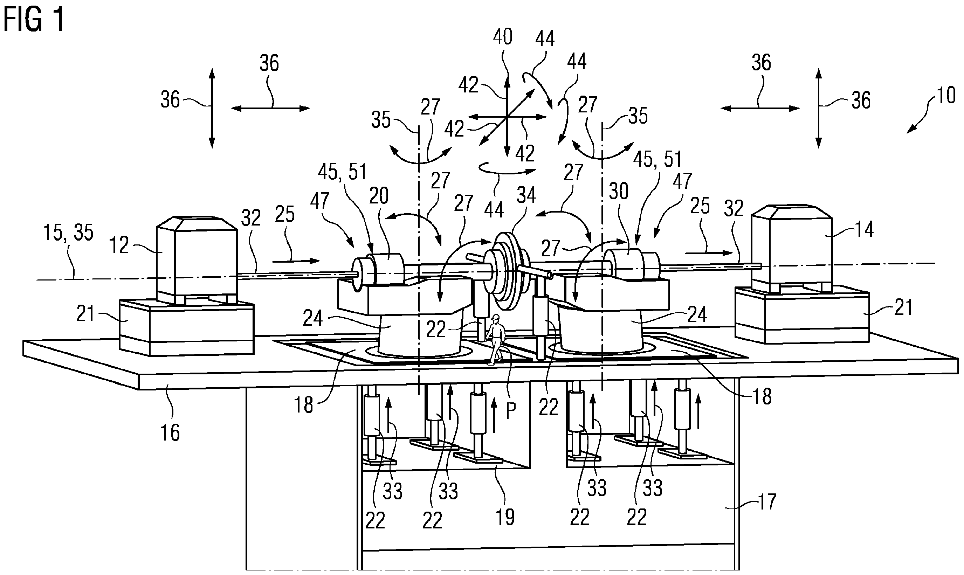

In FIG 1 ist schematisch eine erste Ausführungsform einer beanspruchten Erprobungsvorrichtung 10 in einer Schnittansicht dargestellt. Zur besseren Übersicht ist als Vergleichsmaßstab eine Person P abgebildet. Die Erprobungsvorrichtung 10 umfasst eine Antriebseinheit 12, die als Elektromotor ausgebildet ist, und eine Abtriebseinheit 14, die als Generator ausgebildet ist. Die Antriebseinheit 12 und die Abtriebseinheit 14 sind jeweils auf einem Sockel 21 angeordnet. Zwischen der Antriebseinheit 12 und der Abtriebseinheit 14 sind ein erstes und ein zweites Getriebe 20, 30 angeordnet, die als Windkraftanlagengetriebe 47 ausgebildet sind. Das erste und zweite Getriebe 20, 30 sind typenverschieden ausgebildet und sind auf der Erprobungsvorrichtung 10 zu erproben. Durch die Antriebseinheit 12 ist eine mechanische Antriebsleistung 25 bereitstellbar, die durch das erste und zweite Getriebe 20, 30 an die Abtriebseinheit 14 abgegeben wird. Die Antriebsleistung 25 wird um eine Hauptdrehachse 15 des ersten und zweiten Getriebes 20, 30 erzeugt, die im Zusammenhang der Erprobungsvorrichtung 10 eine Raumachse 35 darstellt. Durch eine Stromerzeugung mit der als Generator ausgebildeten Abtriebseinheit 14 ist der Betrieb der Antriebseinheit 12 zumindest unterstützbar. Zur Übertragung der mechanischen Antriebsleistung 25 ist die Antriebseinheit 12 unmittelbar über eine Leistungswelle 32 mit dem ersten Getriebe 20 an dessen Abtriebsseite 29 drehmomentübertragend verbunden. Analog ist das zweite Getriebe 30 unmittelbar über eine Leistungswelle 32 mit der Abtriebseinheit 14 auf dessen Abtriebsseite 29 drehmomentübertragend verbunden. Das erste und das zweite Getriebe 20, 30 sind über ein Mittellager 34 miteinander verbunden. Das Mittellager 34 ist dazu ausgebildet, Wellen des ersten und zweiten Getriebes 20, 30 drehmomentübertragend zu verbinden und Radialkräfte, bezogen auf die Hauptdrehachse 15, aufzunehmen. Das Mittellager 34 ist ferner über einen Aktuator mit der Umgebung, also der Bodenebene 16, verbunden. Durch den Aktuator 22 sind Radialkräfte in das erste und zweite Getriebe 20, 30 einleitbar. Entlang eines Flusses der mechanischen Antriebsleistung 25, der in FIG 1 als Pfeil dargestellt ist, erfolgt im ersten Getriebe 20 eine Reduzierung einer Drehzahl und im zweiten Getriebe eine Erhöhung einer Drehzahl. Das erste und zweite Getriebe 20, 30 sind jeweils mit ihrer Antriebsseite 26 mit dem Verbindungsflansch 34, und damit in gegenläufiger Übersetzungsrichtung, also der Richtung der Drehzahländerung, verbunden.

Das erste und zweite Getriebe 20, 30 sind jeweils auf einer Versuchshalterung 24 befestigt, die jeweils mit einem Tragrahmen 18 verbunden ist, der sich im Wesentlichen ebenerdig an einer Bodenebene 16 befindet. Der Tragrahmen 18 ist kippbar und/oder verschiebbar ausgebildet, so dass im Bereich des Mittellagers 34 eine mechanische Reaktion 40 gezielt hervorrufbar ist. Dazu sind die Tragrahmen 18 jeweils an Aktuatoren 22 befestigt, die als Hydraulikzylinder ausgebildet sind. Die Aktuatoren 22 sind jeweils dazu ausgebildet, eine Aktuatorkraft 33 auszuüben und so ein Kippen 27 und oder Verschieben 36 des ersten und/oder zweiten Getriebes 20, 30 hervorzurufen. Ein solches Kippen 27 und/oder Verschieben 36 kann um mehrere Raumachsen 35 erfolgen, wie in FIG 1 dargestellt. Die mechanische Reaktion 40 umfasst, je nach der Orientierung des Kippens 27 bzw. Verschiebens 36, Reaktionskräfte 42 im Bereich des Mittellagers 34, die in unterschiedliche räumliche Richtungen orientiert sind. Korrespondierend dazu umfasst die mechanische Reaktion 40 auch Reaktionsdrehmomente 44, die entsprechend den Reaktionskräften 42 unterschiedliche Orientierungen aufweisen. Eine Betätigung der Aktuatoren 22 ist einstellbar, so dass gezielt ein Kippen 27 und/oder Verschieben 36 des ersten und/oder zweiten Getriebes 20, 30 hervorrufbar ist. Die mechanische Reaktion 40, die so hervorgerufen wird, entspricht einem angestrebten Betriebszustand des ersten und zweiten Getriebes 20, 30, unter dem diese zu erproben sind. Dementsprechend liegen Reaktionskräfte 42 und/oder Reaktionsdrehmomente 44 im ersten und zweiten Getriebe 20, 30 vor. Insbesondere wird durch ein Kippen 27 und/oder Verschieben 36 des ersten und/oder zweiten Getriebes 20, 30 in beiden Getrieben 20, 30 jeweils eine spiegelbildlich entsprechende Beanspruchung hervorgerufen. Die mechanische Reaktion 40, also die entsprechenden Reaktionskräfte 42 und Reaktionsdrehmomente 44, sind über Sensoren 45 erfassbar, die jeweils im ersten und zweiten Getriebe 20, 30 angeordnet sind. Dazu sind die Sensoren 45 an Messstellen 51 im ersten und zweiten Getriebe 20, 30 angebracht. Die so erzielten Ergebnisse der Erprobung sind für das erste und zweite Getriebe 20, 30 deshalb unmittelbar miteinander vergleichbar.

In der Erprobungsvorrichtung 10 sind die Aktuatoren 22 auf einem Fundament 17 angeordnet, das unterhalb der Bodenebene 16 liegt. Das Fundament 17 dient als Untergrund 19 und liegt unterhalb der Tragrahmen 18 mit den Versuchshalterungen 24 für die Getriebe 20, 30. Die Aktuatoren 22 sind dadurch im Wesentlichen in einer kellerartigen Vertiefung positioniert. Die Aktuatoren 22 sind nah aneinander positionierbar, wodurch das Fundament 17 eine reduzierte Größe aufweist. Hinreichend belastbare Fundamente 17 und auch hinreichen belastbare Sockel 21 sind aufwendig und kostenintensiv. Die Erprobungsvorrichtung 10 erfordert kleinere Fundamente 17 und Sockel 21 als aus dem Stand der Technik bekannte Lösungen und ist deshalb mit reduziertem Bauaufwand herstellbar.

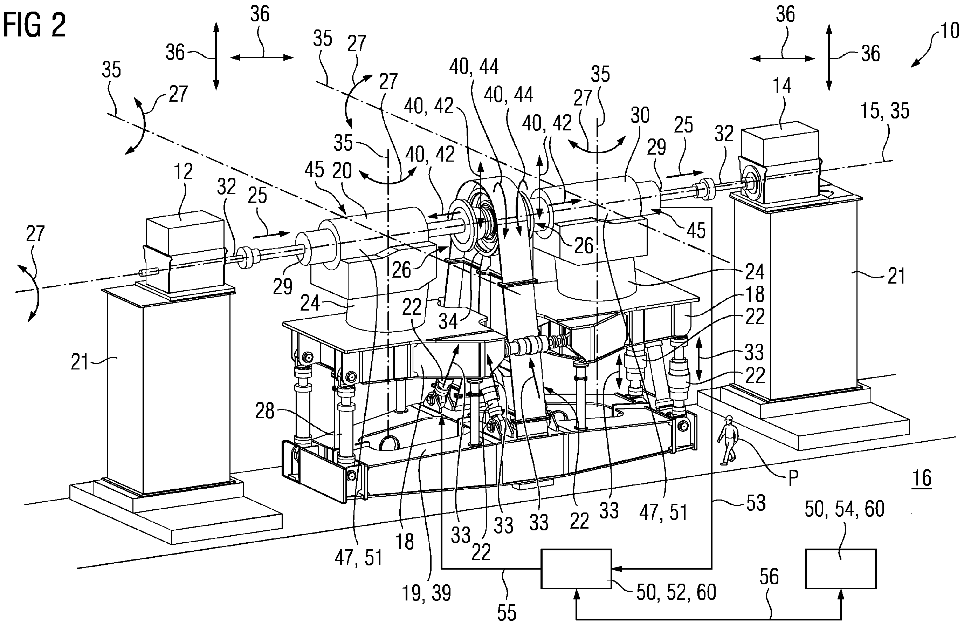

FIG 2 zeigt schematisch eine zweite Ausführungsform der beanspruchten Erprobungsvorrichtung 10 in einer teilweise geschnittenen Schrägansicht. Zur besseren Übersicht ist auch in FIG 2 eine Person P abgebildet, die auf einer Bodenebene 16 steht. Die Erprobungsvorrichtung 10 umfasst eine Antriebseinheit 12 und eine Abtriebseinheit 14, die über ein erstes und ein zweites Getriebe 20, 30 miteinander drehmomentübertragend verbunden sind. Die Getriebe 20, 30 sind als Windkraftanlagengetriebe 47 ausgebildet und sind typenverschieden. Das erste und zweite Getriebe 20, 30 sind in der Erprobungsvorrichtung 10 zumindest teilweise gleichzeitig zu erproben. Die Antriebseinheit 12 ist auf einem Sockel 21 angeordnet und als Elektromotor ausgebildet, durch den mechanische Antriebsleistung 25 bereitgestellt wird. Die mechanische Antriebsleistung 25, deren Flussrichtung durch den Pfeil 25 dargestellt ist, wird über eine Leistungswelle 32 unmittelbar an eine Abtriebsseite 29 des ersten Getriebes 20 übertragen. Die mechanische Antriebsleistung 25 weist ein Drehmoment auf, das um eine Hauptdrehachse 15 der Getriebe 20, 30 orientiert ist und im Zusammenhang mit der Erprobungsvorrichtung 10 einer Raumachse 35 entspricht. Das erste und zweite Getriebe 20, 30 ist über seine jeweilige Antriebsseite 26 mit dem Mittellager 34 verbunden. Im ersten Getriebe 20 erfolgt eine Erhöhung der Drehzahl und im zweiten Getriebe 30 eine Verringerung der Drehzahl. Entlang der Flussrichtung der mechanischen Antriebsleistung 25 sind das erste und zweite Getriebe 20, 30 also in gegenläufiger Übersetzungsrichtung miteinander verbunden. Diese Anordnung wird auch back-to-back-Anordnung genannt. Korrespondierend ist auch das zweite Getriebe 30 an seiner Abtriebsseite 29 über eine Leistungswelle 32 mit der Abtriebseinheit 14 unmittelbar verbunden, die als Generator ausgebildet ist. Mit der in der Abtriebseinheit 14 gewonnen elektrischen Energie ist die Antriebseinheit 12 zumindest teilweise betreibbar. Auch die Abtriebseinheit 14 ist, korrespondierend zur Antriebseinheit 12, auf einem Sockel 21 positioniert.

Die Getriebe 20, 30 sind an Versuchshalterungen 24 befestigt, die jeweils auf einem Tragrahmen 18 angeordnet sind. Die Tragrahmen 18 wiederum sind beweglich auf einer Mehrzahl an Aktuatoren 22 und Stützen 28 aufgenommen. Die Aktuatoren 22, die als Hydraulikzylinder ausgebildet sind, sind dazu geeignet, eine Aktuatorkraft 33 auszuüben, durch die die Tragrahmen 18 kippbar und/oder verschiebbar sind. Die Aktuatoren 22 sind auf einem Basisrahmen 39 angeordnet, der als Untergrund 19 für die Aktuatoren 22 dient. Ein Kippen 27 und/oder Verschieben 36 des ersten und/oder zweiten Getriebes 20, 30 um bzw. entlang einer Raumachse 35 ist durch ein entsprechendes Betätigen der Aktuatoren 22 somit hervorrufbar. Infolgedessen ist wird im ersten und zweiten Getriebe 20, 30 spiegelbildlich entsprechend eine mechanische Reaktion 40 hervorgerufen, die jeweils Reaktionskräfte 42 und Reaktionsdrehmomente 44 umfasst. Die Reaktionskräfte 42 und Reaktionsdrehmomente 44 im ersten und im zweiten Getriebe 20, 30 sind somit gleichzeitig im Wesentlichen spiegelbildlich gleich. Zur gleichen Zeit sind das erste und zweite Getriebe daher der gleichen mechanischen Beanspruchung unterworfen. Die so gleichzeitig vorliegenden korrespondierenden Zustände erlauben es deshalb, die Erprobung des ersten Getriebes unmittelbar mit der Erprobung des zweiten Getriebes zu vergleichen. Dazu ist die Versuchseinrichtung insgesamt und jedes der Getriebe 20, 30 mit Sensoren 45 ausgestattet, die an nicht näher dargestellten Messstellen 51 im jeweiligen Getriebe 20, 30 angeordnet sind. Die Sensoren 45 sind dazu ausgebildet, Messdaten 53 an eine Steuereinheit 50 zu übertragen. Die Steuereinheit 50 umfasst eine interne Steuereinheit 52, die unmittelbar der Erprobungsvorrichtung 10 zugeordnet ist. Die Steuereinheit 50 ist auch dazu ausgebildet, Steuerbefehle 55 an zumindest einen der Aktuatoren 22 auszugeben. Die Steuereinheit 50 umfasst auch eine übergeordnete Steuereinheit 54, die über eine Datenverbindung 56 mit der internen Steuereinheit 52 verbunden ist. Die übergeordnete Steuereinheit 54 kann beispielsweise als Computer-Cloud oder Leitrechner ausgebildet sein, die für einen Erprobungsbetrieb mit der internen Steuereinheit 52 zusammenwirkt. Die interne Steuereinheit 52 und die übergeordnete Steuereinheit 54 weisen je einen Speicher zur Speicherung und Ausführung eines Computerprogrammprodukts 60 auf, über das die Erprobungsvorrichtung 10 betreibbar ist. Durch das Computerprogrammprodukt 60 sind Steuerbefehle 55 für die Aktuatoren 22 vorgebbar und/oder Messdaten 53 von den Sensoren 45 speicherbar und/oder verarbeitbar.

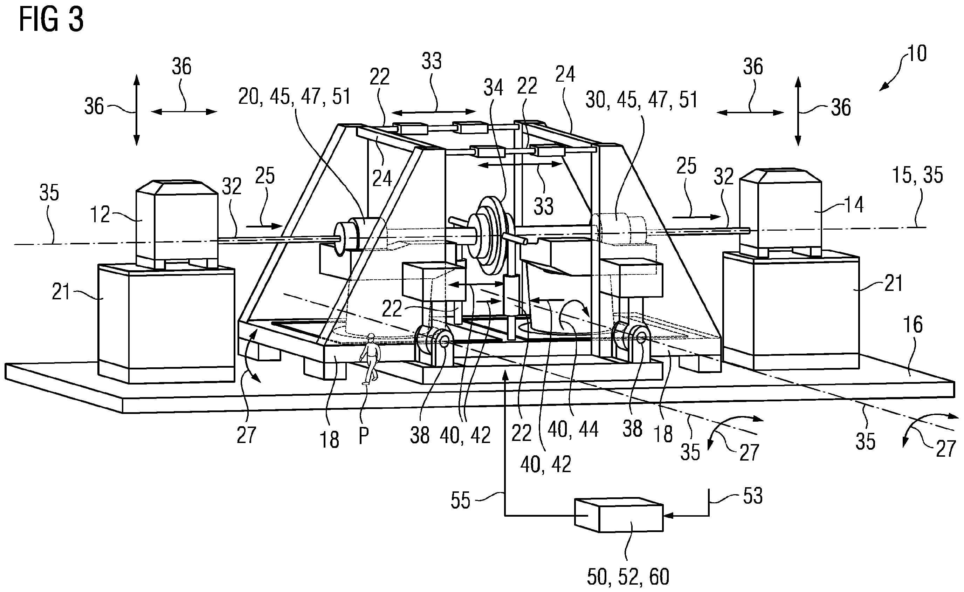

In FIG 3 ist schematisch eine dritte Ausführungsform der beanspruchten Erprobungsvorrichtung 10 dargestellt. Zum Vergleich ist auch eine Person P in FIG 3 dargestellt. Die Erprobungsvorrichtung 10 umfasst eine Antriebseinheit 12 und eine Abtriebseinheit 14. Durch die Antriebseinheit 12, die als Elektromotor ausgebildet ist, wird eine mechanische Antriebsleistung 25 bereitgestellt, die über eine Leistungswelle 32 einem ersten Getriebe 20 zugeführt wird. Das erste Getriebe 20 ist über ein Mittellager 34 mit einem zweiten Getriebe 30 verbunden, über das mittels einer Leistungswelle 32 die mechanische Antriebsleistung 25 der Abtriebseinheit 14 unmittelbar zugeführt wird, die als Generator ausgebildet ist. Das Mittellager 34 ist über mindestens einen Aktuator 22 oder über eine passive Verbindung mit der Bodenebene 16 verbunden. Dadurch sind, bezogen auf die Hauptdrehachse 15, am Mittellager 36 auf das erste und zweite Getriebe 20, 30 Radialkräfte ausübbar. Das erste und zweite Getriebe 20, 30 sind jeweils als Windkraftanlagengetriebe 47 ausgebildet. Die mechanische Antriebsleistung 25 wird in der Erprobungsvorrichtung 10 in die skizzierte Pfeilrichtung entlang einer Hauptdrehachse 15 der Getriebe 20, 30 transportiert, die als Raumachse 35 in der Erprobungsvorrichtung 10 aufzufassen ist. Die Antriebseinheit 12 und die Abtriebseinheit 14 sind jeweils auf einem Sockel 21 positioniert, die auf einer Bodenebene 16 stehen. Die dazwischen angeordneten Getriebe 20, 30 sind jeweils in einer Versuchshalterung 24 befestigt, die entlang bzw. um mehrere Raumachsen 35 kippbar und verschiebbar ist. Die Versuchshalterung 24 ist jeweils fest mit einem Tragrahmen 18 verbunden, der mit der Versuchshalterung 24 um ein Gelenk 38 kippbar ist. Ein Kippen 27 und/oder Verschieben 36 des ersten und/oder zweiten Getriebes 20, 30 ist über Aktuatoren 22 erzielbar, die die Versuchshalterungen 24 des ersten und zweiten Getriebes 20, 30 miteinander verbinden. Die Aktuatoren 22 sind als Hydraulikzylinder ausgebildet und dazu geeignet, jeweils eine Aktuatorkraft 33 auszuüben. Durch ein Kippen 27 und/oder Verschieben 36 des ersten und/oder zweiten Getriebes 20, 30 ist im Bereich des Mittellagers 34 im ersten und zweiten Getriebe 20, 30 eine mechanische Reaktion 40 hervorrufbar, die Reaktionskräfte 42 und Reaktionsdrehmomente 44 umfasst. Die mechanische Reaktion 40 wird auch durch die über das Mittelager 36 ausgeübten Radialkräfte bestimmt. Die Reaktionskräfte 42 und Reaktionsdrehmomente 44 sind im ersten und zweiten Getriebe 20, 30 spiegelbildlich korrespondierend. Die mechanische Reaktion 40 ist in beiden Getrieben 20, 30 somit gezielt einstellbar, und somit ein angestrebter Betriebszustand der Getriebe 20, 30 in einem Erprobungslauf nachstellbar. Die Versuchsaufbauten inkl. Der Getriebe 20, 30 sind mit Sensoren 45 ausgestattet, die an nicht näher gezeigten Messstellen 51 in oder an den Getrieben 20, 30 positioniert sind. Durch die Sensoren 45 sind Messdaten 53 erzeugbar, die von einer Steuereinheit 50 empfangbar sind. Die Steuereinheit 50 umfasst eine interne Steuereinheit 52, die unmittelbar der Erprobungsvorrichtung 10 zugeordnet ist. Die Steuereinheit 50 verfügt über einen Speicher und ist mit einem Computerprogrammprodukt 60 ausgestattet, das dazu ausgebildet ist, die Messdaten 53 von den Sensoren 45 zu speichern und/oder zu verarbeiten. Das Computerprogrammprodukt 60 ist auch dazu ausgebildet, Steuerbefehle 55 zu einem Betätigen der Aktuatoren 22 auszugeben. Dadurch sind das erste und zweite Getriebe 20, 30 zumindest teilweise gleichzeitig erprobbar und Messdaten 53, die zum gleichen Zeitpunkt erzeugt sind, unmittelbar miteinander vergleichbar. Insgesamt erlaubt dies besonders schnell und effizient Erprobungsläufe zum unmittelbaren Vergleich der Getriebe 20, 30 durchzuführen.

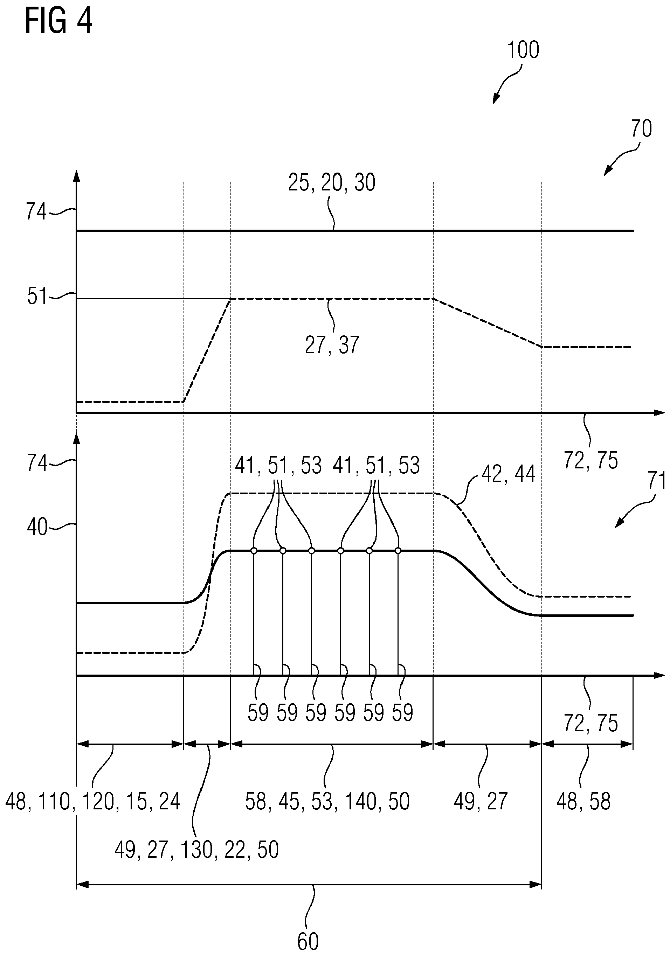

FIG 4 zeigt schematisch den Ablauf einer Ausführungsform des beanspruchten Verfahrens 100 zur Erprobung von Getrieben 20, 30 mit einer Erprobungsvorrichtung 10. FIG 4 geht davon aus, dass ein erster und zweiter Schritt 110, 120, in dem die Getriebe 20, 30 in der Erprobungsvorrichtung 10 angebracht werden und die Erprobungsvorrichtung 10 aktiviert wird, durchgeführt sind. In einem ersten Diagramm 70 ist der Ablauf eines Erprobungslaufs 75 entlang einer horizontalen Zeitachse 72 abgebildet. Das erste Diagramm 70 weist auch eine vertikale Größenachse 74 auf. Während des Erprobungslaufs 75 bleibt eine mechanische Antriebsleistung 25 mit der die Getriebe 20, 30 angetrieben werden, konstant. Beim zweiten Verfahrensschritt 120 stellt sich stellt sich ein stationärer Betrieb 48 ein, in dem die Getriebe 20, 30 ausgerichtet sind, also deren Hauptdrehachsen 15 fluchten. Dementsprechend liegt für das erste und/oder zweite Getriebe 20, 30 gemäß dem ersten Diagramm 70 ein Kippen 27 um einen Kippwinkel 37 von Null vor. Währenddessen stellt sich am ersten und zweiten Getriebe 20, 30, wie an einer Größenachse 40 in einem zweiten Diagramm 71 gezeigt, eine mechanische Reaktion 40 ein. Die Ausführungsform nach FIG 4 geht davon aus, dass nur ein Kippen 27 vorliegt, das mechanische Reaktionen 40 hervorruft, jedoch kein Verschieben 36, wie in FIG 1 bis FIG 3 skizziert. Die mechanische Reaktion 40 umfasst zumindest eine Reaktionskraft 42 und zumindest ein Reaktionsdrehmoment 44, die während des stationären Betriebs 48 im Wesentlichen konstant sind. Die zumindest eine Reaktionskraft 42 und das zumindest eine Reaktionsdrehmoment 44 ergeben sich im Wesentlichen als Stützreaktionen der Getriebe 20, 30 in den jeweiligen Versuchshalterungen 24.

An den stationären Betrieb 48 im zweiten Schritt 120 schließt sich in einem dritten Schritt 130 ein Übergangsbetrieb 49 ein, in dem zumindest der Kippwinkel 37 erhöht wird. Im dritten Schritt 130 wird zumindest ein Aktuator 22 der Erprobungsvorrichtung 10 über eine Steuereinheit 50 betätigt, wodurch den sich ein Kippen 27 des ersten und/oder zweiten Getriebes 20, 30 ergibt. Infolge dieses Kippens 27 steigen das zumindest eine Reaktionsdrehmoment 44 und die zumindest eine Reaktionskraft 42 an und erreichen in einem vierten Schritt 140 einen im Wesentlichen konstanten Betrag. Im dritten Schritt 130 wird durch das Kippen 27 ein angestrebter Betriebszustand erreicht, der im Rahmen des Erprobungslaufes zu messen ist. Es erfolgt ein Messbetrieb 58 im dritten Schritt 130, in dem mittels Sensoren 45, die an Messstellen 51 in den Getrieben 20, 30, an einem Aktuator 22, einer Versuchshalterung 24 und/oder einem Tragrahmen 18 angebracht sind, Messdaten 53 erzeugt. Die Messdaten 53 sind im zweiten Diagramm 71 exemplarisch als Messpunkte 41 dargestellt, die an eine Steuereinheit 50 der Erprobungsvorrichtung 10 zu übermitteln sind. Jeder der Messpunkte 41 weist eine eindeutige Position auf der Zeitachse 72 auf, die als Zeitstempel 59 abgebildet ist. Mittels des Zeitstempels 59 sind Messdaten 53 für das erste und zweite Getriebe 20, 30, also der zu diesem Zeitpunkt vorliegende Betriebszustand, unmittelbar miteinander vergleichbar.

An den vierten Schritt 140 schließt sich ein weiterer Übergangsbetrieb 49 an, in dem der Kippwinkel 37 reduziert wird. Dementsprechend stellen sich die zumindest eine Reaktionskraft 42 und das zumindest eine Reaktionsdrehmoment 44 auf einem verringerten Betrag ein. Dem folgt ein weiterer stationärer Betrieb 48, der auch als Messbetrieb 58 nutzbar ist. Mehrere Durchläufe einzelner oder aller skizzierten Schritte 110, 120, 130, 140 sind zu einem Erprobungslauf 75 mit erhöhter Komplexität kombinierbar. Die Steuereinheit 50 ist dazu geeignet, die Betätigung von Aktuatoren 22 mittels Steuerbefehlen 55 vorzugeben und/oder die Messdaten 53 aus dem Erprobungslauf 75 zu speichern und/oder auszuwerten.

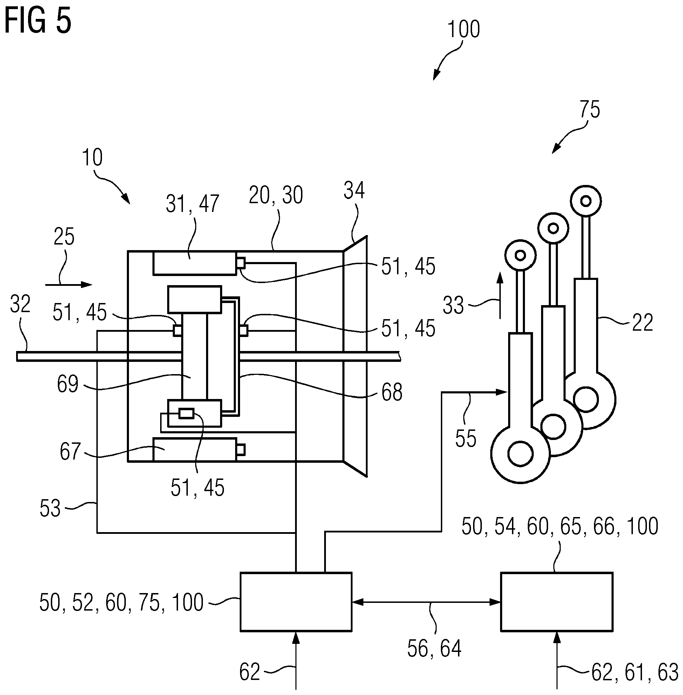

In FIG 5 ist schematisch ein Ausschnitt einer vierten Ausführungsform der beanspruchten Erprobungsvorrichtung 10 dargestellt. FIG 5 zeigt dabei eines der beiden Getriebe 20, 30, die mittels der Erprobungsvorrichtung 10 zu erproben sind. Das Getriebe 20, 30 ist als Planetengetriebe 31, insbesondere als Windkraftanlagengetriebe 47 ausgebildet ist. Dabei ist ein Hohlrad 67, ein Planetenradträger 68 und ein Sonnenrad 69 jeweils mit einem Sensor 45 versehen. Die Sensoren 45 sind dazu ausgebildet, eine Dehnung, eine Kraft, eine Temperatur und/oder eine Vibration zu erfassen und sind an jeweils an einer Messstelle 51 angeordnet. Eine mechanische Antriebsleistung 25 wird über eine Leistungswelle 32 zugeführt, die mit dem Sonnenrad 69 drehmomentübertragend gekoppelt ist. Ferner ist das Getriebe 20, 30 über ein Mittellager 34 mit einem weiteren nicht dargestellten Getriebe verbindbar. Jeder der Sensoren 45 ist zum Übertragen von Messdaten 53 mit einer internen Steuereinheit 52 gekoppelt, die zu einer Steuereinheit 50 gehört. Die interne Steuereinheit 52 ist dazu geeignet, eine Benutzereingabe 62 zu empfangen, durch die in einem Computerprogrammprodukt 60, das in der Steuereinheit 50 ausführbar gespeichert ist, ein Erprobungslauf 75 für die Erprobungsvorrichtung 10 einstellbar ist. Mittels des Computerprogrammprodukts 60 ist somit beispielsweise das in FIG 4 beschriebene Verfahren 100 ausführbar. Ferner sind die interne Steuereinheit 52 und das Computerprogrammprodukt 60 dazu ausgebildet, Steuerbefehle 55 an zumindest einen Aktuator 22 auszugeben, durch den eine auszuübende Aktuatorkraft 33 vorgebbar ist. Hierdurch ist ein angestrebter Erprobungslauf 75 einstellbar.

Des Weiteren ist die interne Steuereinheit 52 mit einer übergeordneten Steuereinheit 54 über eine Datenverbindung 56 gekoppelt ist. Die Datenverbindung 56 ist als Internetverbindung 64 ausgebildet und die übergeordnete Steuereinheit 54 als Computer-Cloud 65. In der Computer-Cloud 65 ist ein sogenannter Digitaler Zwilling 66, auch Digital Twin genannt, also ein Simulationsabbild zumindest eines Getriebes 20, 30 in Verbindung mit der Erprobungsvorrichtung 10 gespeichert. Auf der übergeordneten Steuereinheit 54 ist auch ein Computerprogrammprodukt 60 gespeichert, das mit dem Computerprogrammprodukt 60 in der internen Steuereinheit 52 über die Datenverbindung 56 zusammenwirkt und beispielsweise das Verfahren 100 nach FIG 4 zu umzusetzen. Auch die übergeordnete Steuereinheit 54 ist dazu ausgebildet, eine Benutzereingabe 62 zu empfangen, durch die einen Erprobungslauf 75 einzustellen. Beispielsweise ist durch die Benutzereingabe 62 eine Erprobungskraft 61 und/oder ein Erprobungsdrehmoment 63 vorgebbar, die durch die Reaktionskraft 42 bzw. das Reaktionsdrehmoment 44 am jeweiligen Getriebe 20, 30 umzusetzen ist.

## Patentansprüche

1. Erprobungsvorrichtung (10) für Getriebe (20, 30), umfassend eine Antriebseinheit (12) und eine Abtriebseinheit (14), die über ein erstes und ein zweites Getriebe (20, 30) miteinander verbunden sind, **dadurch gekennzeichnet, dass** zur zumindest teilweise gleichzeitigen Erprobung des ersten und zweiten Getriebes (20, 30) die Erprobungsvorrichtung (10) zu einem einstellbaren Kippen (27) und/oder einstellbaren Verschieben (36) zumindest des ersten Getriebes (20) ausgebildet ist.

2. Erprobungsvorrichtung (10) nach Anspruch 1, **dadurch gekennzeichnet, dass** durch das Kippen (27) und/oder Verschieben (36) des ersten Getriebes (20) zwischen dem ersten und zweiten Getriebe (20, 30) eine Reaktionskraft (42) und/oder ein Reaktionsdrehmoment (44) erzeugbar ist, die zu einem Erprobungsablauf (75) gehören.

3. Erprobungsvorrichtung (10) nach Anspruch 1 oder 2, **dadurch gekennzeichnet, dass** die Erprobungsvorrichtung (10) zu einem einstellbaren Kippen (27) und/oder einstellbaren Verschieben (36) des zweiten Getriebes (30) ausgebildet ist.

4. Erprobungsvorrichtung (10) nach einem der Ansprüche 1 bis 3, **dadurch gekennzeichnet, dass** zumindest das erste Getriebe (20) mittels zumindest eines Aktuators (22) kippbar und/oder verschiebbar ausgebildet ist.

5. Erprobungsvorrichtung (10) nach einem der Ansprüche 1 bis 4, **dadurch gekennzeichnet, dass** zumindest das erste Getriebe (20) auf einem kippbaren und/oder verschiebbaren Tragrahmen (18) befestigt ist.

6. Erprobungsvorrichtung (10) nach einem der Ansprüche 1 bis 5, **dadurch gekennzeichnet, dass** das erste und zweite Getriebe (20, 30) in gegenläufiger Übersetzungsrichtung miteinander verbunden sind.

7. Erprobungsvorrichtung (10) nach einem der Ansprüche 4 bis 6, **dadurch gekennzeichnet, dass** der zumindest eine Aktuator (22) am Untergrund (19) befestigt ist.

8. Erprobungsvorrichtung (10) nach einem der Ansprüche 4 bis 7, **dadurch gekennzeichnet, dass** der Aktuator (22) unterhalb einer Bodenebene (16) angeordnet ist.

9. Erprobungsvorrichtung (10) nach einem der Ansprüche 1 bis 8, **dadurch gekennzeichnet, dass** das erste oder zweite Getriebe (20, 30) unmittelbar drehmomentübertragend mit der Antriebseinheit (12) oder der Abtriebseinheit (14) verbunden ist.

10. Erprobungsvorrichtung (10) nach einem der Ansprüche 1 bis 9, **dadurch gekennzeichnet, dass** das erste und/oder zweite Getriebe (20, 30) als Windkraftanlagengetriebe (47) ausgebildet ist.

11. Erprobungsvorrichtung (10) nach einem der Ansprüche 1 bis 10, **dadurch gekennzeichnet, dass** der Erprobungsvorrichtung (10) eine Steuereinheit (50) zu einem Einstellen des Kippens (27) zumindest des ersten Getriebes (20) zugeordnet ist.

12. Verfahren (100) zum Erproben von Getrieben (20, 30), umfassend die Schritte:
a) Bereitstellen eines ersten und eines zweiten Getriebes (20, 30) in einer Erprobungsvorrichtung (10);
b) Aktivieren einer Antriebseinheit (12) der Erprobungsvorrichtung (10);
c) Einstellbares Kippen (27) und/oder Verschieben (36) zumindest des ersten Getriebes (20, 30) zu einem Erzeugen einer Reaktionskraft (42) und/oder eines Reaktionsdrehmoments (44) zwischen dem ersten und zweiten Getriebe (20, 30);
wobei die Reaktionskraft (42) und/oder das Reaktionsdrehmoment (44) einer Erprobungskraft (61) bzw. einem Erprobungsdrehmoment (63) entspricht, die zu einem bestimmungsgemäßen Erprobungslauf (75) gehören.

13. Verfahren (100) nach Anspruch 12, **dadurch gekennzeichnet, dass** das Erprobe des ersten und zweiten Getriebes (20, 30) zumindest teilweise gleichzeitig erfolgt.

14. Verfahren (100) nach Anspruch 12 oder 13, **dadurch gekennzeichnet, dass** die Erprobungsvorrichtung (10) nach einem der Ansprüche 1 bis 11 ausgebildet ist.

15. Steuereinheit (50) zum Ausgeben von Betätigungsbefehlen für zumindest einen Aktuator (22) einer Erprobungsvorrichtung (10), **dadurch gekennzeichnet, dass** die Steuereinheit (50) zu einem Durchführen eines Erprobungsverfahrens (100) nach einem der Ansprüche 12 bis 14 ausgebildet ist.

16. Computerprogrammprodukt (60) zum Einstellen von Erprobungskräften (61) und/oder Erprobungsdrehmomenten (63) zu einem Erproben von Getrieben (20, 30) in einen Erprobungslauf (75) und zum Ausgeben von Steuerungsbefehlen (55) für zumindest einen Aktuator (22) einer Erprobungsvorrichtung (10), **dadurch gekennzeichnet, dass** das Computerprogrammprodukt (60) auf einer Steuereinheit (50) nach Anspruch 15 speicherbar und ausführbar ausgebildet ist.
